# EUROPEAN PATENT SPECIFICATION

(11) **EP 3 781 533 B1**
(45) Date of publication and mention of the grant of the patent: **21.08.2024**
(21) Application number: 19829709.5
(22) Date of filing: 17.04.2019
(51) Int. Cl.: C04B 28/04, C04B 111/00

(54) **RADIATION-IMPERMEABLE AND RADON GAS-TIGHT FIBER-REINFORCED CONCRETES**
STRAHLUNGSUNDURCHLÄSSIGE UND RADONGASDICHTE FASERBETONE
BÉTONS RENFORCÉS DE FIBRES ÉTANCHES IMPERMÉABLES AUX RAYONNEMENTS ET ÉTANCHES AU GAZ RADON

(30) Priority: 18.04.2018 TR 201805562
(43) Date of publication of application: 24.02.2021
(73) Proprietor: Fibrobeton Yapi Elemanlari Sanayi Insaat Ve Ticaret Anonim Sirketi, 34810 Istanbul (TR); Plustechno Danismanlik ve Yapi Kimyasallari Ticaret Limited Sirketi, 34906 Pendik/Istanbul (TR)
(72) Inventor: AKALIN, Özlem, 34906 Pendik/Istanbul (TR)
(74) Representative: Yalvaç, Oya
(86) International application number: PCT/TR2019/050256
(87) International publication number: WO 2020/022992

(56) References cited:
- EP-A1- 1 368 283
- EP-A1- 2 440 504
- DEMIR F ET AL: "Determination of radiation attenuation coefficients of heavyweight- and normal-weight concretes containing colemanite and barite for 0.663MeV -rays", ANNALS OF NUCLEAR ENERGY, PERGAMON PRESS, OXFORD, GB, vol. 38, no. 6, 14 February 2011 (2011-02-14), pages 1274 - 1278, XP028188056, ISSN: 0306-4549, [retrieved on 20110217], DOI: 10.1016/J.ANUCENE.2011.02.009
- DEMIR F ET AL: "Radiation transmission of heavyweight and normal-weight concretes containing colemanite for 6MV and 18MV X-rays using linear accelerator", ANNALS OF NUCLEAR ENERGY, PERGAMON PRESS, OXFORD, GB, vol. 37, no. 3, 1 March 2010 (2010-03-01), pages 339 - 344, XP026895491, ISSN: 0306-4549, [retrieved on 20100106], DOI: 10.1016/J.ANUCENE.2009.12.010
- GÜNDÜZ G ET AL: "Development of new nuclear shileding materials containingf vitrified colemanite and impregnated polymer", JOURNAL OF NUCLEAR MATERIALS, ELSEVIER B.V, NETHERLANDS, vol. 140, 1 January 1986 (1986-01-01), pages 44 - 55, XP002604001, ISSN: 0022-3115

## Description

### TECHNICAL FIELD

The present invention relates to radiation-attenuating and radon gas-tight fiber-reinforced concretes having improved physico-mechanical properties and containing at least one aggregate and at least one superplasticizer, and to methods for producing the same.

### PRIOR ART

Radiation is a form of energy emitted from both natural and man-made sources. Radiation emitting sources include cosmic rays, radon gas, radioactive materials in the earth's crust, and the field of nuclear energy, as well as the devices employed in medicinal, agricultural, medical, industrial, and military applications. Most of the radiation dose we receive from natural sources is due to radon gas. Radon gas is a radioactive gas with a tendency to accumulate in closed spaces and is the second most common cause of lung cancer. It tends to accumulate by infiltrating from the soil and leaking through cracks and junctions in buildings. The building industry and the manufacture of innovative materials are the most prominent fields for measures to be taken for protection against exposure to radiation in buildings.

Concretes with radiation attenuation properties in literature are manufactured at high densities by using natural minerals such as heavyweight aggregate, barite, hematite, limonite, and magnetite. In addition to these minerals, steel, iron, and lead scraps and wastes were also tested as artificial aggregates. Physico-mechanical properties of the concrete vary depending on the selected natural or man-made aggregate, and the effect of such variation on radiation attenuation/shielding character of the concrete has been studied. In literature, radiation attenuation properties of concretes have been evaluated by calculating half-value thickness (HVT), tenth-value thickness (TVT), and Linear Attenuation Coefficient, and the effect of material thickness on radiation permeability is studied. R. K. Chauhan et al., "Development and Design Mix of Radiation Shielding Concrete for gamma-ray Shielding" (2017), found similar attenuation factors for values after 8 cm in samples with a thickness of 2-10 cm among samples with a size of 10 cm x 10 cm x 10 cm.

In concretes in the technical field, cracks, as well as collapse, delamination, and contraction are observed due to the high water absorption. The aggregates in use exhibit a dispersion problem in the cement matrix, leading to a failure to ensure homogenization, and thus a failure to achieve physicochemical compatibility between concrete components. On the other hand, there are a very low number of studies with an aim to achieve a concrete having radon gas impermeability. The patent application CN103224369 discloses an anti-radiation concrete with a structure containing polypropylene, steel or lead fiber and cinder aggregate, and a method for producing the said concrete. The anti-radiation performance of this concrete is improved thanks to its contents of silica ash and fly ash minerals. Similarly, the patent application CN101921093 also discloses a concrete structure containing silica ash and fly ash. The aim of this disclosure was also to improve radiation impermeability of concrete by using various aggregates. US6630683B2 discloses a concrete improved in terms of anti-radiation by using two types of aggregates one of which is metallic. EP1368283A1 discloses a cementitious composition.

There is, however, still a need in the art for the use of low-level radioactive materials in building construction and the development of radiation shielding, innovative concrete products.

### OBJECT OF THE INVENTION

The present invention relates to a fiber-reinforced concrete product that meets the above-mentioned needs, eliminates the disadvantages of the prior art, and provides a number of additional advantages.

The primary object of the present invention is to provide a fiber-reinforced concrete product having radon gas-tightness properties in addition to its radiation attenuating (shielding) properties. Such concretes with radon gas-tightness properties will not only provide protection from radiation sources (nuclear energy, medical, medicinal, military, industrial), but also against naturally occurring radiation.

An object of the present invention is to provide a fiber-reinforced concrete product with a low level of thermal conductivity and improved fire resistance and non-combustibility properties. Another object of the present invention is to provide a fiber-reinforced concrete product with a minimal amount of crack formation, delamination, and collapse.

Another object of the present invention is to provide a fiber-reinforced concrete product which is thinner and lighter than the anti-radiation concretes in the technical field.

Another object of the present invention is to provide a fiber-reinforced concrete product as a construction material alternative to the lead sheets, which were developed especially for use in hospitals.

### DETAILED DESCRIPTION OF THE INVENTION

The present disclosure relates to radiation-attenuating and radon gas-tight fiber-reinforced concrete having improved physico-mechanical properties and containing at least one aggregate and at least one superplasticizer.

According to the present invention, a fiber-reinforced concrete containing at least one cement material, at least one aggregate composition and at least one superplasticizer, wherein the aggregate composition comprises a mixture of barite, colemanite, and magnetite.

In one aspect of the present invention, the fiber in the fiber-reinforced concrete is selected from the group comprising zirconium materials, carbon, fiberglass, polypropylene, nylon, polyethylene, polyester, and steel, and mixtures thereof, and is preferably fiberglass.

According to the present invention, the fiber-reinforced concrete contains at least one cement material. Here, such cement materials are selected from the group comprising white Portland cement, gray Portland cement, and mixtures thereof.

In one aspect of the present invention, the fiber-reinforced concrete contains an aggregate composition in the range of 40% to 70, and preferably of 50% to 60%.

The aggregate composition contains 1-60% barite, 1-60% colemanite and 1-60% magnetite relative to the aggregate composition. Owing to an aggregate composition with such rates of components, the physicochemical compatibility between cement and aggregates in the fiber-reinforced concrete appears to be optimized. In this way, the capacity of concrete to absorb water was decreased, and crack formation, collapse and delamination were minimized.

In one aspect of the present invention, the particle size of aggregates varies between 1-3000 µm, and preferably between 1-1000 µm. In one aspect of the present invention, the fiber-reinforced concrete contains at least one superplasticizer along with an aggregate composition comprising colemanite with a d50 of 1-3000 µm, barite with a d50 of 300-750 µm, and magnetite with a d50 of 1-400 µm. Here, the particle size is measured by known methods from the prior art, and preferably with a Malvern particle size analyzer. This measurement is carried out with Malvern Mastersizer 2000 according to ISO 787/7 standard.

By using aggregates with such particle sizes, radiation impermeability and radon gas tightness of the fiber-reinforced concrete according to the present application are increased. More particularly, the physico-mechanical properties, and thus the thickness of the fiber-reinforced concrete are optimized.

In one aspect of the present invention, the fiber-reinforced concrete contains at least one aggregate having two different particle sizes. Here, particle sizes vary between 1-4000 µm.

In one aspect of the present invention, the fiber-reinforced concrete has a thickness (wall thickness) of 4-7 cm, and preferably of 3-6 cm. A number of concrete forms with different wall thicknesses obtained through a precise measurement with a ruler are filled with the optimized concrete mortars to give those mortars the shape of such forms. Following setting, the microstructure of the produced concrete mortar is measured with known methods (such as scanning electron microscope, SEM) in the technical field.

According to the present invention, the fiber-reinforced concrete contains at least one superplasticizer. Here, superplasticizers are selected among acrylate, methallylsulfonate, lignosulfonate, polynaphthalene, sulfonic acid alkali metal salt, polycarboxylate polymer (polycarboxylic acid salt), and mixtures thereof, and are preferably polycarboxylate polymer.

A superplasticizer is included in the fiber-reinforced concrete in the range of 0.1-5%, and preferably of 0.25-60%.

In another embodiment of the present invention, the superplasticizer is polycarboxylate polymer, and it is included in the fiber-reinforced concrete in the range of 0.1-5%, and preferably of 0.25-60%. By means of such a rate of superplasticizer, the rate of water in the fiber-reinforced concrete was decreased, and the diffusion of radon gas into the pores of concrete was minimized. The diffusion of radon gas into the pores appears to be directly proportionate to the rate of water in the fiber-reinforced concrete. Particularly, radon gas tightness of fiber-reinforced concretes of which the ratio of water content to the amount of cement material varies from 0.1 to 0.5 and preferably from 0.2 to 0.35 was found to be approximately 100%.

In one aspect of the present invention, the water:cement material ratio of the fiber-reinforced concrete is preferably between 0.2-0.35, and more preferably between 0.23-0.30.

In one aspect of the present invention, the fiber-reinforced concrete may additionally contain surfactants, and curing materials.

In one aspect of the present invention, the fiber-reinforced concrete contains at least one curing material. Herein, the said curing material is selected among para toluene sulfonic acid (PTSA), phthalic acid anhydride, aromatic polyamines, polymercaptan polymers, acrylic copolymer, vinyl acetate and ethylene polymer dispersion, and mixtures thereof, and is preferably acrylic copolymer, and more preferably vinyl acetate and ethylene polymer dispersion.

A curing material is included in the fiber-reinforced concrete in the range of 0.1-5%, and preferably of 1-1.16%.

In another aspect of the present invention, the fiber-reinforced concrete contains at least one surfactant. Here, the surfactant is selected among polyvinyl alcohol, polyoxyethylenemonomethyl ether, dodecylbenzene sodium sulfonate, polyethylene lauryl ether, non-ionic isopropyl alcohol fatty acid ester and derivates, non-ionic glycol fatty acid ester and derivates, polyethylenepropylene glycol, and mixtures thereof, and is preferably polyethylenepropylene glycol.

A surfactant is included in the fiber-reinforced concrete in the range of 0.001-2%, and preferably of 0.001-0.004%.

In an embodiment of the present invention, the fiber-reinforced concrete according to the present application contains the following components:
a) a cement material in the range of 30-60%,
b) at least one aggregate in the range of 30-80%,
c) at least one superplasticizer in the range of 0.1-5%, and/or
d) at least one fiber in the range of 1-5%.

In another aspect of the present invention, the fiber-reinforced concrete according to the present application contains the following components:
a) a cement material in the range of 35-50%,
b) at least one aggregate in the range of 40-70%,
c) at least one superplasticizer in the range of 0.25-60%, and/or
d) at least one fiber in the range of 1.5-3.5%.

In one aspect of the present invention, the fiber-reinforced concrete according to the present application contains the following components:
a) a cement material in the range of 30-60%,
b) at least one aggregate in the range of 30-80%,
c) at least one curing material in the range of 0.1-5%,
d) at least one superplasticizer in the range of 0.1-5%, and/or
e) at least one surfactant in the range of 0.001-2%.

In another aspect of the present invention, the fiber-reinforced concrete according to the present application contains the following components:
a) a cement material in the range of 35-50%,
b) at least one aggregate in the range of 40-70%,
c) at least one curing material in the range of 1-1.6%,
d) at least one superplasticizer in the range of 0.25-0.60%, and/or
e) at least one surfactant in the range of 0.001-0.004%.

In one aspect of the present invention, the fiber-reinforced concrete contains 0.25-0.6% polycarboxylate polymer as a superplasticizer, and 0.1-5% vinyl acetate and ethylene polymer dispersion as a curing material.

In one aspect of the present invention, the fiber-reinforced concrete contains 0.25-0.6% polycarboxylate polymer as a superplasticizer, 0.1-5% vinyl acetate and ethylene polymer dispersion as a curing material, and 0.001-2% polyethylenepropylene glycol as a surfactant.

In one aspect of the present invention, the fiber-reinforced concrete contains an aqueous chemical mixture comprising at least one surfactant, at least one superplasticizer and at least one curing material. Here, such aqueous chemical mixture preferably comprises polyethylenepropylene glycol, polycarboxylate polymer, and acrylic copolymer.

In one non-claimed aspect of the present disclosure, the process for preparing the fiber-reinforced concrete according to the present application comprises the following steps:
a) at least one aggregate and at least one cement material are put into a mixer,
b) at least one surfactant, at least one superplasticizer, and at least one curing material are mixed with water to form an aqueous chemical mixture,
c) this aqueous chemical mixture is mixed with the mixture obtained in step a) under appropriate conditions and speed, and
d) the final mixture is applied to the concrete form together with fiberglass.

In another non-claimed aspect of the present disclosure, the process for preparing the fiber-reinforced concrete according to the present application comprises the following steps:
a) at least one aggregate and at least one cement material are put into a mixer, and a solid mixture is obtained,
b) at least one surfactant, at least one superplasticizer, and at least one curing material are mixed with water to form an aqueous chemical mixture,
c) the solid mixture is stirred at 20 rpm for 35 seconds,
d) the aqueous chemical mixture and the solid mixture are stirred at 11 rpm for 55 seconds,
e) the resulting mixture from step d) is stirred at high speed for 35 seconds, and
f) the resulting mixture from step e) is applied to the concrete form together with fiberglass.

According to the present invention, the process for preparing the fiber-reinforced concrete according to the present application comprises the following steps:
a) barite, colemanite, and magnetite, are put into a mixer together with at least one cement material,
b) polyethylenepropylene glycol, polycarboxylate polymer, and acrylic copolymer are mixed with water to form an aqueous chemical mixture,
c) this aqueous chemical mixture is mixed with the mixture obtained in step a) under appropriate conditions and speed, and
d) the final mixture is applied to the concrete form together with fiberglass.

The present invention is further described by the following examples. Although these examples are not intended to limit the scope of the present invention, the details thereof should be considered and evaluated in the light of the foregoing description.

### EXAMPLES:

### Example 1:

| Components | Type of component | Premix and Spray GRC mixture ratios (%) |
|---|---|---|
| Cement | CEM II B/L 42.5 White | 35-50 |
| | CEM II 42.5 R Gray | |
| Aggregate composition | Barite - colemanite - magnetite | 40-70 |
| Water/cement | | 0.23-0.30 |
| Chemical 1 | Curing material | 1-1.6 |
| Chemical 2 | Polycarboxylate superplasticizer | 0.25-0.60 |
| Chemical 3 | Surfactant | 0.001-0.004 |
| Fiberglass | | 1.5-3.5 |

### Preparation Process:

a) a number of aggregates, namely barite, colemanite, and magnetite, are mixed with a cement material,
b) polyethylenepropylene glycol, polycarboxylate polymer, and acrylic copolymer are mixed with water to form an aqueous chemical mixture,
c) this aqueous chemical mixture is mixed with the mixture obtained in step a) under appropriate conditions and speed,
wherein an automatic stirring system is employed:
in the first stage, stirring liquid raw materials at 11 rpm for 55 seconds,
in the second stage, stirring solid raw materials at 20 rpm for 35 seconds, having a break, and proceeding at high speed after the break, and
in the third stage, stirring at high speed for 35 seconds, and
d) the final mixture is applied to the concrete form together with fiberglass.

The fiber-reinforced concretes according to the present application provide the following properties:
Flexural strength: 4-5 MPa
Water absorption: 11 + 3%
Dry density: 1.9-2.2 g/cm³
Freeze-thaw effect: RL ≥ 0.75
Largest dimensional changes due to moisture: 1.2 ± 0.3 mm/m
Modulus of elasticity, MOE: 10,000 - 25,000 (TS EN 11701 Standards 1-8)

| | |
|---|---|
| Radiation Attenuation Property | Compared to the anti-radiation concretes in literature, at least 10% higher linear attenuation coefficients (cm⁻¹) for gamma and neutron radiation in FRC products. |
| Radon Gas Tightness Property | < 4 pCi/L (148 Bq/m³) Source: US EPA |
| | < 2.7 pCi/L (100 Bq/m³) Source: World Health Organization (WHO) |
| | (Required values within buildings) |

The fiber-reinforced concretes according to the present application provide the following properties: (TS EN 196 Standards)

| |
|---|
| Compressive strength values: |
| The early strength at 2 days is higher than 20 MPa. |
| The early strength at 28 days is higher than 35.5 MPa. |
| Initial setting time: ≥ 60 min. |
| Soundness: ≤ 10 mm |
| Flow: 14.5 - 20.5 cm |
| Unit weight: > 2200 g/cm³ |
| Loss on ignition and insoluble residual: ≤ 5% |
| Chloride content: ≤ 0.1 |
| Sulfate amount: ≤ 3.5% |

## Claims

1. A fiber-reinforced concrete containing at least one cement material, at least one aggregate composition and at least one superplasticizer, wherein the aggregate composition comprises a mixture of barite, colemanite, and magnetite.

2. The fiber-reinforced concrete according to claim 1, wherein the aggregate composition comprises 1-60 % of barite, 1-60 % of colemanite, and 1-60 % of magnetite.

3. The fiber-reinforced concrete according to claim 1 or 2, wherein the aggregate composition comprises barite with a d50 of 1-3000 µm, colemanite with a d50 of 300-750 µm, and magnetite with a d50 of 1-400 µm.

4. The fiber-reinforced concrete according to claim 1, wherein the superplasticizer is selected from the group comprising acrylate, methallylsulfonate, lignosulfonate, polynaphthalene, sulfonic acid alkali metal salt, polycarboxylate polymer, and mixtures thereof.

5. The fiber-reinforced concrete according to claim 4, wherein the superplasticizer is polycarboxylate polymer.

6. The fiber-reinforced concrete according to claim 4 or 5, wherein the superplasticizer is included in the fiber-reinforced concrete in the range of 0.25-0.6%.

7. The fiber-reinforced concrete according to any one of the preceding claims, wherein the concrete additionally contains at least one curing material selected from the group comprising para toluene sulfonic acid (PTSA). phthalic acid anhydride, aromatic polyamines, polymercaptan polymers, acrylic copolymer, vinyl acetate and ethvlene polymer dispersion, and mixtures thereof.

8. The fiber-reinforced concrete according to claim 7, wherein the curing material is included in the fiber-reinforced concrete in the range- of 0.1-5%.

9. The fiber-reinforced concrete according to claim 7 or 8, wherein the curing material is vinyl acetate and ethylene polymer dispersion.

10. The fiber-reinforced concrete according to any one of the preceding claims, wherein the concrete contains at least one surfactant.

11. The fiber-reinforced concrete according to claim 10, wherein the surfactant is included in the concrete in the range of 0.001-2%.

12. The fiber-reinforced concrete according to claim 11, wherein the surfactant is selected from the group comprising polyvinyl alcohol, polyoxyethylenemonomethyl ether, dodecylbenzene sodium sulfonate, polyethylene lauryl ether, polyethylenepropylene glycol, and mixtures thereof.

13. The fiber-reinforced concrete according to claim 12, wherein the surfactant is polyethylenepropylene glycol.

14. The fiber-reinforced concrete according to any one of the preceding claims, wherein the concrete contains fiberglass as fiber.

15. The fiber-reinforced concrete according to any one of the preceding claims, wherein the cement material is selected from the group comprising white Portland cement, gray Portland cement, and mixtures thereof.

16. The fiber-reinforced concrete according to any one of the preceding claims, wherein the concrete additionally contains water and a cement material, and the water:cement material ratio is between 0.1-0.5.

17. A process for producing the fiber-reinforced concrete according to claim 1, wherein the process comprises the following steps:
a) barite, colemanite, and magnetite, are put into a mixer together with at least one cement material,
b) polyethylenepropylene glycol, polycarboxylate polymer, and acrylic copolymer are mixed with water to form an aqueous chemical mixture,
c) this aqueous chemical mixture is mixed with the mixture obtained in step a) under appropriate conditions and speed, and
d) the final mixture is applied to the concrete form together with fiberglass.

## Patentansprüche

1. Faserverstärkter Beton, der mindestens ein Zementmaterial, mindestens eine Aggregatzusammensetzung und mindestens einen Superverflüssiger enthält, wobei die Aggregatzusammensetzung ein Gemisch aus Baryt, Colemanit und Magnetit umfasst.

2. Faserverstärkter Beton nach Anspruch 1, wobei die Aggregatzusammensetzung zu 1-60 % Baryt, zu 1-60 % Colemanit und zu 1-60 % Magnetit umfasst.

3. Faserverstärkter Beton nach Anspruch 1 oder 2, wobei die Aggregatzusammensetzung Baryt mit einem d50 von 1-3000 µm, Colemanit mit einem d50 von 300-750 µm und Magnetit mit einem d50 von 1-400 µm umfasst.

4. Faserverstärkter Beton nach Anspruch 1, wobei der Superverflüssiger aus der Gruppe umfassend Acrylat, Methallylsulfonat, Lignosulfonat, Polynaphthalin, Sulfonsäurealkalimetallsalz, Polycarboxylatpolymer und Gemische davon ausgewählt ist.

5. Faserverstärkter Beton nach Anspruch 4, wobei der Superverflüssiger Polycarboxylatpolymer ist.

6. Faserverstärkter Beton nach Anspruch 4 oder 5, wobei der Superverflüssiger in dem faserverstärkten Beton im Bereich von 0,25-0,6 % enthalten ist.

7. Faserverstärkter Beton nach irgendeinem der vorstehenden Ansprüche, wobei der Beton zusätzlich mindestens ein Härtungsmaterial enthält, das aus der Gruppe umfassend para-Toluolsulfonsäure (PTSA), Phthalsäureanhydrid, aromatische Polyamine, Polymercaptanpolymere, Acrylcopolymer, Vinylacetat- und Ethylenpolymerdispersion und Gemische davon ausgewählt ist.

8. Faserverstärkter Beton nach Anspruch 7, wobei das Härtungsmaterial in dem faserverstärkten Beton im Bereich von 0,1-5 % enthalten ist.

9. Faserverstärkter Beton nach Anspruch 7 oder 8, wobei das Härtungsmaterial Vinylacetat- und Ethylenpolymerdispersion ist.

10. Faserverstärkter Beton nach irgendeinem der vorstehenden Ansprüche, wobei der Beton mindestens ein Tensid enthält.

11. Faserverstärkter Beton nach Anspruch 10, wobei das Tensid in dem Beton im Bereich von 0,001-2 % enthalten ist.

12. Faserverstärkter Beton nach Anspruch 11, wobei das Tensid aus der Gruppe umfassend Polyvinylalkohol, Polyoxyethylenmonomethylether, Dodecylbenzolnatriumsulfonat, Polyethylenlaurylether, Polyethylenpropylenglycol und Gemische davon ausgewählt ist.

13. Faserverstärkter Beton nach Anspruch 12, wobei das Tensid Polyethylenpropylenglycol ist.

14. Faserverstärkter Beton nach irgendeinem der vorstehenden Ansprüche, wobei der Beton Glasfaser als Faser enthält.

15. Faserverstärkter Beton nach irgendeinem der vorstehenden Ansprüche, wobei das Zementmaterial aus der Gruppe umfassend weißen Portland-Zement, grauen Portland-Zement und Gemische davon ausgewählt ist.

16. Faserverstärkter Beton nach irgendeinem der vorstehenden Ansprüche, wobei der Beton zusätzlich Wasser und ein Zementmaterial enthält und das Verhältnis von Wasser: Zementmaterial zwischen 0,1-0,5 liegt.

17. Verfahren zum Herstellen des faserverstärkten Betons nach Anspruch 1, wobei das Verfahren die folgenden Schritte umfasst:
a) Baryt, Colemanit und Magnetit werden zusammen mit mindestens einem Zementmaterial in einen Mischer gegeben,
b) Polyethylenpropylenglycol, Polycarboxylatpolymer und Acrylcopolymer werden mit Wasser unter Bildung eines wässrigen chemischen Gemischs gemischt,
c) dieses wässrige chemische Gemisch wird mit dem in Schritt a) erhaltenen Gemisch unter geeigneten Bedingungen und bei geeigneter Geschwindigkeit gemischt und
d) das finale Gemisch wird zusammen mit Glasfaser auf die Betonform aufgebracht.

## Revendications

1. Béton renforcé de fibres contenant au moins un matériau cimentaire, au moins une composition de granulat et au moins un superplastifiant, dans lequel la composition de granulat comprend un mélange de baryte, de colémanite et de magnétite.

2. Béton renforcé de fibres selon la revendication 1, dans lequel la composition de granulat comprend 1-60 % de baryte, 1-60 % de colémanite et 1-60 % de magnétite.

3. Béton renforcé de fibres selon la revendication 1 ou 2, dans lequel la composition de granulat comprend de la baryte ayant un d50 de 1-3 000 µm, de la colémanite ayant un d50 de 300-750 µm et de la magnétite ayant un d50 de 1-400 µm.

4. Béton renforcé de fibres selon la revendication 1, dans lequel le superplastifiant est choisi dans le groupe comprenant un acrylate, un méthylallylsulfonate, un lignosulfonate, un polynaphtalène, un sel de métal alcalin d'acide sulfonique, un polymère polycarboxylate et des mélanges de ceux-ci.

5. Béton renforcé de fibres selon la revendication 4, dans lequel le superplastifiant est un polymère polycarboxylate.

6. Béton renforcé de fibres selon la revendication 4 ou 5, dans lequel le superplastifiant est inclus dans le béton renforcé de fibres dans la plage de 0,25-0,6 %.

7. Béton renforcé de fibres selon l'une quelconque des revendications précédentes, dans lequel le béton contient de plus au moins un matériau de cure choisi dans le groupe comprenant l'acide paratoluènesulfonique (APTS), l'anhydride d'acide phtalique, des polyamines aromatiques, des polymères polymercaptans, un copolymère acrylique, une dispersion de polymère d'acétate de vinyle et d'éthylène et des mélanges de ceux-ci.

8. Béton renforcé de fibres selon la revendication 7, dans lequel le matériau de cure est inclus dans le béton renforcé de fibres dans la plage de 0,1-5 %.

9. Béton renforcé de fibres selon la revendication 7 ou 8, dans lequel le matériau de cure est une dispersion de polymère d'acétate de vinyle et d'éthylène.

10. Béton renforcé de fibres selon l'une quelconque des revendications précédentes, dans lequel le béton contient au moins un tensioactif.

11. Béton renforcé de fibres selon la revendication 10, dans lequel le tensioactif est inclus dans le béton dans la plage de 0,001-2 %.

12. Béton renforcé de fibres selon la revendication 11, dans lequel le tensioactif est choisi dans le groupe comprenant l' alcool polyvinylique, l'éther monométhylique de polyoxyéthylène, le dodécylbenzènesulfonate de sodium, l'éther laurylique de polyéthylène, le polyéthylène-propylène glycol et des mélanges de ceux-ci.

13. Béton renforcé de fibres selon la revendication 12, dans lequel le tensioactif est le polyéthylène-propylène glycol.

14. Béton renforcé de fibres selon l'une quelconque des revendications précédentes, dans lequel le béton contient des fibres de verre en tant que fibres.

15. Béton renforcé de fibres selon l'une quelconque des revendications précédentes, dans lequel le matériau cimentaire est choisi dans le groupe comprenant le ciment Portland blanc, le ciment Portland gris et des mélanges de ceux-ci.

16. Béton renforcé de fibres selon l'une quelconque des revendications précédentes, dans lequel le béton contient de plus de l'eau et un matériau cimentaire et le rapport eau:matériau cimentaire étant compris entre 0,1-0,5.

17. Procédé pour la production du béton renforcé de fibres selon la revendication 1, dans lequel le procédé comprend les étapes suivantes :
a) de la baryte, de la colémanite et de la magnétite sont placées dans un mélangeur conjointement avec au moins un matériau cimentaire,
b) du polyéthylène-propylène glycol, un polymère polycarboxylate et un copolymère acrylique sont mélangés avec de l'eau pour former un mélange chimique aqueux,
c) ce mélange chimique aqueux est mélangé avec le mélange obtenu à l'étape a) dans des conditions et à une vitesse appropriées et
d) le mélange final est appliqué dans le coffrage pour béton conjointement avec des fibres de verre.
